# EUROPÄISCHE PATENTANMELDUNG

(11) **EP 1 627 861 A2**
(43) Veröffentlichungstag der Anmeldung: **22.02.2006**
(21) Anmeldenummer: 05450137.4
(22) Anmeldetag: 18.08.2005
(51) Int. Cl.: C04B 28/30, E04B 5/16

(54) **Pumpfähiger selbstnivellierender Magnesiaestrich**

(30) Priorität: 19.08.2004 AT 14002004
(71) Anmelder: Styromagnesit Steirische Magnesitindustrie GmbH, 8611 St. Katharein/Laming (AT)
(72) Erfinder: Lechner, Manfred, 1130 Wien (AT)
(74) Vertreter: Haffner, Thomas M.

(57) **Zusammenfassung**

Bei einem pumpfähigen selbstnivellierenden Magnesiaestrich enthaltend kaustisch gebrannte Magnesia, MgCl₂, Wasser und Quarzsand sind Epoxidharze im Verhältnis zu MgCl₂ in Mengen von 1:2 bis 1:4 Gewichtsteilen sowie Härter und organische Säuren zur Einstellung der Abbindegeschwindigkeit zugesetzt.

## Beschreibung

Die Erfindung bezieht sich auf einen pumpfähigen selbstnivellierenden Magnesiaestrich enthaltend kaustisch gebrannte Magnesia, MgCl₂, Wasser und Quarzsand. Derartige pumpfähige selbstnivellierende Estriche können insbesondere auf trockenem und straubfreiem Untergrund in einfacher Weise aufgetragen werden, wobei auch Haftbrücken vorgeschlagen wurden, auf welche anschließend Magnesiaestrich aufgetragen wird.

Bestehende Rezepturen für pumpfähige selbstnivellierende Magnesiaestriche erlauben es in aller Regel nicht, dünnschichtige Gießbeläge mit hoher Festigkeit herzustellen, wobei unter dünnschichtigen Belägen Beläge mit einer Schichtstärke von etwa 5 mm oder darunter zu verstehen sind. Die Kapillarporosität von Magnesiaestrichen neigt bei entsprechender Druck- oder Biegezugbelastung zu Rissbildung, wobei insbesondere bei geringer Chloridbeständigkeit von verwendeten Haftbrücken die Gefahr der Ausbildung von Blasen und O-berflächenunregelmäßigkeiten, welche wiederum die Riss- und die Bruchgefahr begünstigen, besteht.

In der AT-U 7007 wurde nun bereits eine Rezeptur vorgeschlagen, welche sich auch bei dünnen Schichten durch verbesserte Biegezugsfestigkeit und Druckfestigkeit auszeichnet, sodass die Eignung für Reparaturen bestehender Estriche verbessert wurde. Derartige Gießbeläge haben neben den bekannten Bestandteilen kaustisch gebrannte Magnesia, Magnesiumchlorid, Wasser und Quarzsand auch organische Dispersionen enthalten. Die organischen Dispersionen zielten darauf ab, die Kapillarporosität herabzusetzen und eine homogenere Durchmischung der Zuschlagstoffe und insbesondere des Quarzsandes bzw. der kaustisch gebrannten Magnesia zu erzielen. In Zwangsmischern wurde auch tatsächlich eine wesentlich homogenere Mischung in wesentlich kürzerer Zeit beobachtet, sodass besser pumpfähige Massen resultieren, welche auch bei geringeren Wasseranteilen noch pumpfähig bleiben, um schnellere Trocknungszeiten zu ermöglichen.

Derartige polymermodifizierte Beläge zielen somit im Wesentlichen darauf ab, die Kapillarporen zu verkleben, wobei allerdings die Oberflächenhärte bei längerer Lagerung in Wasser abnimmt und weiters eine Fleckenbildung an der Oberfläche auftritt, und insgesamt eine für hohe Belastungen unzureichende Oberflächenhärte und ein unzureichender Abriebswiderstand erzielt wird. Der Verbesserung der Druckfestigkeit und der Biegezugfestigkeit gegenüber nicht mit Kunststoffdispersionen modifizierten Magnesiaestrichen stehen nach wie vor Nachteile bei hoher Verschleißbeanspruchung und hoher Abriebsbeanspruchung sowie eine Gefahr der Ausbildung von Wasserflecken gegenüber.

Die Erfindung zielt nun darauf ab, einen pumpfähigen selbstnivellierenden Magnesiaestrich der eingangs genannten Art zu schaffen, mit welchem zusätzlich zu den bereits durch die Polymermodifikation erzielten Vorteilen auch Verbesserungen der Oberflächenhärte und des Abriebwiderstands sowie der Wasserbeständigkeit erzielt werden. Zur Lösung dieser Aufgabe besteht der erfindungsgemäße Magnesiaestrich im wesentlichen darin, dass Epoxidharze im Verhältnis zu MgCl₂ in Mengen von 1:2 bis 1:4 Gewichtsteilen sowie Härter und organische Säuren zur Einstellung der Abbindegeschwindigkeit zugesetzt sind. Dadurch, dass nun Epoxidharze und hier wiederum insbesondere Zweikomponentenharze zum Einsatz gelangen, werden beim Aushärten zwei selbständig ablaufende Reaktionen beobachtet, die einander nicht behindern, sodass es zur Ausbildung von zwei miteinander verwobenen Netzwerken kommt, die einander gegenseitig ergänzen, wodurch eine höhere Oberflächenhärte und Belastbarkeit dünnschichtiger Beläge resultieren. Die Aushärtung des Zweikomponentenepoxidharzsystems führt zur Ausbildung eines zweiten Bindegerüsts parallel zur Sorelbindung, wobei gleichzeitig bessere Fließeigenschaften und damit Verbesserungen in der Verarbeitbarkeit beobachtet werden. Problematisch bei der Kombination von Sorelbindung und Epoxidharzhärtern ist allerdings der Umstand, dass die Aushärtung prinzipiell überaus rasch erfolgt, wodurch sich relativ knapp bemessene Bearbeitungszeiten ergeben können. Um hier eine entsprechende Einstellbarkeit der Abbindegeschwindigkeit zu gewährleisten sind erfindungsgemäß der pumpfähigen selbstnivellierenden Mischung organische Säuren, und hier wiederum insbesondere Zitronensäure, zugesetzt. Derartige organische Säuren führen bei der Ausbildung der Sorelbindung zu einer Abbindeverzögerung. Gleichzeitig wird durch derartige organische Säuren zwar die Abbindegeschwindigkeit von Epoxidharzen beschleunigt, durch entsprechenden Zusatz organischer Säure ergibt sich aber eine verbesserte Pumpfähigkeit und eine ausreichende Aushärtezeit, wobei es insbesondere nicht mehr erforderlich ist, das Material zu glätten bzw. am Ende der Aushärtezeit zu spachteln. Es wird somit sowohl in Bezug auf die Verarbeitungszeit als auch bei der Nachbehandlung eine Reihe von Vorteilen erzielt, wobei das Epoxidharzgerüst nunmehr die Möglichkeit bietet, Böden bei Schichtstärken von 5 mm riss- und schwindungsfrei zu verlegen. Das durch die Epoxidharzbindung ausgebildete zweite Stützgerüst in der Magnesiabindung verhindert ein Schwinden und Treiben des Belags, wobei die höhere Oberflächenhärte und die bessere Abriebfestigkeit mit einer verbesserten Chemikalienbeständigkeit im Vergleich zu herkömmlichen Magnesiaestrichen einhergeht. Diese verbesserte Chemikalienbeständigkeit ergibt sich aus der zusätzlichen Schutzschicht auf Basis von Harzen, und insbesondere von Polyurethanharzen. Eine erhöhte Wasserbeständigkeit wird bereits durch die Zugabe des Epoxidharzes erreicht, da dieses die Kapillarporen wirkungsvoll verschließt und in die Poren eindringt.

Eine optimale Einstellbarkeit der Abbindegeschwindigkeit und des Aushärtungsverhaltens läßt sich erfindungsgemäß bevorzugt dadurch erzielen, dass organische Säuren insbesondere Zitronensäure in Mengen zwischen 0,5 und 5 Gew.-% bezogen auf MgCl₂ zugesetzt sind.

Wie auch bereits im Zusammenhang mit polymermodifizierten Magnesiastrichen vorgeschlagen wurde, ist es im Rahmen der Erfindung vorteilthaft, Additive, und insbesondere Entschäumer und/oder oberflächenaktive Zusätze in Mengen zwischen 0,05 und 2 Gew.-% bezogen auf die gesamte Mischung zuzusetzen. Als Additive kommen hier bevorzugt polyethermodifizierte Polydimethylsiloxane, Emulsionen paraffinbasischer Mineralöle oder hydrophobe Komponenten sowie Propylenglykol und/oder Tripropylenglykolmethylether in Betracht. Eine besonders hohe Abriebfestigkeit wird durch Wahl einer entsprechenden Siebkennlinie für Quarzsand und Glasmikrokugeln gewährleistet. Mit Vorteil wird zu diesem Zweck so vorgegangen, dass Quarzsand in einer Korngröße zwischen 0,3 und 0,1 mm sowie Glasmikrokugeln mit einer Korngröße kleiner 0,2 mm in einem Gewichtsverhältnis von 20:1 bis 3:1 bezogen auf die Quarzsandmenge und weiters Quarzmehl mit einer Korngröße kleiner 0,05 mm eingesetzt sind.

Prinzipiell kann die pumpfähige selbstnivellierende Mischung in entsprechenden Gebinden auch über längere Zeiträume gelagert werden, wobei hier mit Vorteil das Epoxidharz als Feststoffemulsion in entsprechenden Kunststoffgebinden eingesetzt wird. Mit Vorteil ist die Lieferform so gewählt, dass der pumpfähige selbstnivellierende Magnesiaestrich aus drei Komponenten hergestellt ist, wobei eine erste Komponente die Epoxidharzfeststoffemulsion, eine weitere Komponente MgCl₂ x 6 H₂O, Härter, Zitronensäure, Ethanol und Entschäumer und die dritte Komponente MgO und Quarzsand enthält. Die Epoxidharzfeststoffemulsion sowie die den Härter enthaltende gleichfalls flüssige Phase können in entsprechenden Kunststoffgebinden angeliefert werden, wohingegen die dritte Komponente in Säcken zur Auslieferung gelangen kann.

Prinzipiell sollte die Verarbeitungstemperatur zwischen 10° und 25° C liegen und wenigstens 3° C über dem Taupunkt. Die relative Luftfeuchtigkeit sollte zwischen 40 und 80 % liegen, um ein optimales Aushärten zu gewährleisten. Mit der erfindungsgemäßen Ausbildung von zwei gesonderten Tragstrukturen im ausgehärteten Estrich ist auch eine Nass-in-Nassverlegung des dünnschichtigen Belages möglich.

Der erfindungsgemäße Magnesiaestrich zeichnet sich durch Druckfestigkeiten in der Größenordnung von 60 N/mm², Biegezugfestigkeiten in der Größenordnung von 15 N/mm², eine Dichte bei 20° C von etwa 1,9 g/cm³, einen Abriebwiderstand von ca. 700 mg/1000 U, 1000 g, H22-Rad und eine Oberflächenhärte (Shore D) von > 85 aus. Die Leitfähigkeitsmesswerte als Erdableitwiderstand wurde mit < 10 MOhm bestimmt.

### Ausführungsbeispiel:

### Beispiel 1:

Die oben erwähnten drei Komponenten haben im Einzelnen folgende Zusammensetzung

### 1. Komponente

| | | |
|---|---|---|
| a) | Epoxidharz (Bisphenol-A-Epichlorhydrin-Festharzemulsion-Lösung in H₂O mit einem Epoxid-Equivalentgewicht von ca. 1000 (Festkörpergehalt ca. 53%, EquiVGew. ca. 990)) | 5,72 Gew.-% |

### 2. Komponente

| | | |
|---|---|---|
| a) | Härter (Epoxidharzaminaddukt-Lösung in H2O mit einem H-Equivalentgewicht von ca. 200 (ca. 73%-ige Lösung, EquiVGew. ca. 190)) | 1,59 Gew.-% |
| b) | MgCl2*6 H2O | 14,63 Gew.-% |
| c) | Wasser | 9,75 Gew.-% |
| d) | Zitronensäure | 0,08 Gew.-% |
| e) | Entschäumer | 0,75 Gew.-% |
| | (Polysiloxan/Kombination Fettstoff-Kieselsäure-Weißöl (polyethermodifiziertes Polymethylsiloxan, Kombination modifizierter, nicht ionogener Fettstoffe, hydrophober Kieselsäure und aromatenfreier, medizin. unbedenklicher Weißöle)) | |
| f) | Alkohol (Ethanol) | 0,75 Gew.-% |
| g) | oberflächenaktives Additiv (modifizierter Glykolmethylether (Tripropylenglykolmethylether)) | 0,35 Gew.-% |

### 3. Komponente

| | | |
|---|---|---|
| a) | MgO | 23,40 Gew.-% |
| b) | Quarzsand (ME 23; F 32) | 32,37 Gew.-% |
| c) | Quarzmehl (W 6/ W 8) | 5,15 Gew.-% |
| d) | Glasmikrokugeln (CP 03) | 3,19 Gew.-% |

Beim Vermischen dieser 3 Komponenten unter Einhaltung der angegebenen Gewichtsprozente sind allfällige Verunreinigungen, welche die Gesamtmenge auf 100 Gew.% ergänzen, nicht im Einzelnen angegeben.

### Beispiel 2:

### 1. Komponente

| | | |
|---|---|---|
| a) | Epoxidharz (Bisphenol-A-Epichlorhydrin-Festharzemulsion-Lösung in H₂O mit einem Epoxidequivalentgewicht von ca. 600 (591)) | 5,72 Gew.-% |

### 2. Komponente

| | | |
|---|---|---|
| a) | Härter (Epoxidharzaminaddukt-Lösung in H₂O mit einem H-Equivalentgewicht von ca. | 1,84 Gew.-% |
| | 200 (ca. 73%-ige Lösung, EquiVGew. ca. 190)) | |
| b) | MgCl2*6 H2O | 14,84 Gew.-% |
| c) | Wasser | 9,82 Gew.-% |
| d) | Zitronensäure | 0,06 Gew.-% |
| e) | Entschäumer (Polysiloxan/Kombination Fettstoff-Kieselsäure-Weißöl (polyethermodifiziertes Polymethylsiloxan, Kombination modifizierter, nicht ionogener Fettstoffe, hydrophober Kieselsäure und aromatenfreier, medizin. unbedenklicher Weißöle)) | 0,75 Gew.-% |
| f) | Alkohol (Ethanol) | 0,25 Gew.-% |
| g) | oberflächenaktives Additiv (modifizierter Glykolmethylether (Tripropylenglykolmethylether)) | 0,35 Gew.-% |
| h) | Fließmittel (polymeres sulfoniertes Melamin / Mg-Lignin-Sulfonat) | 0,30 Gew.-& |

### 3. Komponente

| | | |
|---|---|---|
| a) | MgO | 23,60 Gew.-% |
| b) | Quarzsand (ME 23; F 32) | 33,85 Gew.-% |
| c) | Quarzmehl (W 6/ W 8) | 5,20 Gew.-% |
| d) | Glasmikrokugeln (CP 03) | 3,42 Gew.-% |

Auch hier sind Verunreinigungen, welche die Gesamtmenge auf 100 Gew.-% ergänzen, nicht gesondert angeführt.

Die gewählten Komponenten erlauben es in jedem Fall eine entsprechende Lagerzeit für die Ausgangssubstanz zu gewährleisten, wobei unmittelbar nach dem Zusammenschütten der Komponenten der entsprechende Aushärtungsprozess beginnt und in den oben angegebenen Zeiten die entsprechenden Endfestigkeiten erreicht werden. Als Verarbeitungstemperaturen wurden jeweils Temperaturen zwischen 10°C und 25°C gewählt, wobei eine relative Feuchtigkeit im Bereich von 40 bis 80 Gew.% eingehalten werden muss. In beiden Beispielen wurde die 2. Komponente in die 1. Komponente eingebracht und homogenisiert, worauf die flüssige Mischung unter Rühren mit den Feststoffen der 3. Komponente versetzt wurde. Nach erfolgter Homogenisierung wurde die Masse auf die zu belegende Fläche gegossen und mit einem Stiftrakel verteilt. Anschließend wurde mit einem Rüttler nachbehandelt. Eine Versiegelung konnte 12 bis 24 Stunden nach dem Verlegen des Belags aufgebracht werden.

Generell gilt, dass die zu grundierende Fläche trocken sein soll und bevorzugt höchstens 4% Restfeuchte bei zementgebundenen Böden und 0,5 Gew.% bei Anhydrituntergründen aufweisen sollte.

Je nach Qualität des Untergrundes kann dieser auch durch Kugelstrahlen oder ähnliche Methoden vorbereitet werden. Die Haftzugfestigkeit sollte in aller Regel mind. 1,0 N/mm² betragen.

## Patentansprüche

1. Pumpfähiger selbstnivellierender Magnesiaestrich enthaltend kaustisch gebrannte Magnesia, MgCl₂, Wasser und Quarzsand, **dadurch gekennzeichnet, dass** Epoxidharze im Verhältnis zu MgCl₂ in Mengen von 1:2 bis 1:4 Gewichtsteilen sowie Härter und organische Säuren zur Einstellung der Abbindegeschwindigkeit zugesetzt sind.

2. Pumpfähiger selbstnivellierender Magnesiaestrich nach Anspruch 1, **dadurch gekennzeichnet, dass** organische Säuren insbesondere Zitronensäure in Mengen zwischen 0,5 und 5 Gew.-% bezogen auf MgCl₂ zugesetzt sind.

3. Pumpfähiger selbstnivellierender Magnesiaestrich nach Anspruch 1 oder 2, **dadurch gekennzeichnet, dass** Additive, insbesondere Entschäumer und/oder oberflächenaktive Zusätze, in Mengen zwischen 0,05 und 2 Gew.-% bezogen auf die gesamte Mischung zugesetzt sind.

4. Pumpfähiger selbstnivellierender Magnesiaestrich nach Anspruch 1, 2 oder 3, **dadurch gekennzeichnet, dass** Quarzsand in einer Korngröße zwischen 0,3 und 0,1 mm sowie Glasmikrokugeln mit einer Korngröße kleiner 0,2 mm in einem Gewichtsverhältnis von 20:1 bis 3:1 bezogen auf die Quarzsandmenge und weiters Quarzmehl mit einer Korngröße kleiner 0,05 mm eingesetzt sind.

5. Pumpfähiger selbstnivellierender Magnesiaestrich nach einem der Ansprüche 1 bis 4, **dadurch gekennzeichnet, dass** Epoxidharz als Feststoffemulsion eingesetzt ist.

6. Pumpfähiger selbstnivellierender Magnesiaestrich nach einem der Ansprüche 1 bis 5, **dadurch gekennzeichnet, dass** die Mischung aus drei Komponenten hergestellt ist, wobei eine erste Komponente die Epoxidharzfeststoffemulsion, eine weitere Komponente MgCl₂ x 6 H₂O, Härter, Zitronensäure, Ethanol und Entschäumer und die dritte Komponente MgO und Quarzsand enthält.
